# EUROPÄISCHE PATENTANMELDUNG

(11) **EP 1 060 822 A2**
(43) Veröffentlichungstag der Anmeldung: **20.12.2000**
(21) Anmeldenummer: 00112555.8
(22) Anmeldetag: 14.06.2000
(51) Int. Cl.: B23K 9/067

(54) **Verfahren zum Anschweissen von Schweisselementen an ein Werkstück**

(30) Priorität: 16.06.1999 DE 19927371
(71) Anmelder: Franz, Udo, Prof. Dr., 39124 Magdeburg (DE)
(72) Erfinder: Franz, Udo, Prof. Dr., 39124 Magdeburg (DE)
(74) Vertreter: Leinung, Günter

(57) **Zusammenfassung**

Die Erfindung betrifft ein Verfahren zum Anschweißen von Schweißelementen an Werkstücke.

Dabei ist das Verfahren dadurch gekennzeichnet, daß mittels einer Prozeßführung das Verfahren in seiner Gesamtheit gesteuert abläuft, aber auch in den einzelnen Prozeßstufen, den Teilprozessen wie Zündungsprozeß und den Schmelz- und Bindungsprozessen, die einzeln, bezogen auf eine der Teilprozeßstufen, gesteuert ablaufen können. Die Zündung des Lichtbogens erfolgt dabei unabhängig vom Werkstoff der zu schweißenden Teile, dessen Zündung nach der Bildung einer ionisierten Zündstrecke zwischen dem Schweißelement und dem Werkstück erfolgt.

## Beschreibung

Die Erfindung betrifft ein Verfahren zum Anschweißen von Schweißelementen an ein Werkstück nach dem Oberbegriff des Anspruches 1.

Aus dem Stand der Technik ist allgemein bekannt, daß für das Fügen von vorzugsweise bolzenförmigen Bauteilen das Bolzenschweißen mit Spitzenzündung oder das Bolzenschweißen mit Hubzündung eingesetzt wird (Trillmich, R., Stand des Lichtbogenschweißens in der Praxis - Verfahren und Einsatzbereiche - in: Schweißtechnik 2/94, Seite 18 -21).

Dabei wird das Bolzenschweißverfahren mit Spitzenzündung vorrangig für das Anschweißen von Bolzen kleinerer Durchmesser im Bereich von 3 bis 8 mm auf dünnen Blechen angewendet, während das Bolzenschweißen mit Hubzündung vorwiegend für Bolzen größerer Durchmesser, so für Bolzendurchmesser von 6 mm und darüber hinaus genutzt wird. Die notwendige Energie für den jeweiligen Schweißprozeß wird bei dem Bolzenschweißen mit Spitzenzündung über Kondensatoren bereitgestellt, während beim Bolzenschweißen mit Hubzündung unterschiedliche Stromquellen genutzt werden. Die charakteristischen Verfahrensstufen sind beim Fügeprozeß die Zündphase, die Schmelzphase und die Eintauch- bzw. Bindephase, welche beim Hubzündungsverfahren von der Dynamik der Stromquelle und den eingestellten Parametern bestimmt wird, während beim Spitzenzündungsverfahren diese Phasen von den Parametern des Entladekreises und von der Ladespannung der verwendeten Kondensatorbatterien und deren Kapazität abhängen. Bei beiden Schweißverfahren wird die Schmelzphase über die Kontaktierung beider Schmelzbäder bei annähernd gleichen bzw. abfallendem Stromfluß beendet.

Dabei hat sich nachteilig herausgestellt, daß die Schmelze zum Ende der Lichtbogenbrennphase infolge der Kurzschlußbrückenbildung und des Kurzschlußstromes stark deformiert und verspritzt wird, was negativ die Qualität der Schweißverbindung beeinflußt.

So wurde mit der DE 196 20 774 C 1 ein Verfahren zum Anschweißen von bolzenförmigen Bauteilen an ein Werkstück vorgeschlagen, welches sich unmittelbar auf den in der Schmelzphase geprägten Kontaktierungsprozeß bezieht, wobei der energetische Aufwand zur Schmelzbadbildung durch die Wärmequelle, einem Lichtbogen, so gestaltet wird, daß ausreichend Schmelze für die Bindung zur Verfügung steht und die Einleitung des Bindungsprozesses durch die Schweißstromeinwirkung nicht oder nur unwesentlich gestört werden soll.

Dies soll erreicht werden, indem die Energie im Schweißprozeß anhand der erforderlichen Schweißgutmasse genau dosiert wird und die Abschaltung bzw. die nahezu Nullsetzung des Stromflusses unmittelbar vor der Berührung beider Schmelzbäder, das des anzuschweißenden Bolzens und das des Werkstückes, erfolgt, wobei die Verfahrensführung so beschrieben wird, daß unmittelbar vor der Kontaktierung der beiden Schmelzen, die Schweißstromführung geändert wird und die Schweißstromwerte von der unmittelbaren Kontaktierung der beiden Schmelzbäder Werte von 0 bzw. gegen 0 gehend annehmen.

Es sei ferner auf folgende Veröffentlichungen verwiesen, die sich dem Problem des Schweißens von Befestigungselementen mittels des Lichtbogenschweißens befassen, so die DE AS 2 227 384, die DE OS 25 32 311 und die DE 296 02 114 U 1, die nur mit einem Hubzündungsschweißverfahren realisiert werden können.
Mit der Thematik der Verringerung der Fehleranfälligkeiten beim Bolzenschweißen befasst sich ein Artikel von Wolfgang Rehm (u. a.) 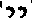 Untersuchung zur Verringerung der Fehleranfälligkeit beim Bolzenschweißen mit Hubzündung", in Schweißen und Schneiden 34 (1982), Heft 9.
Mit dieser Veröffentlichung wird darauf hingewiesen, dass solche Schweißparameter wie Hubhöhe, Eintauchtiefe, Eintauchgeschwindigkeit, Schweißzeit, Schweißstromstärke, Schweißspannung und Polung Einfluss haben können auf die Güte von mit Hubzündung bolzengeschweißten Verbindungen. Auch diese Veröffentlichung betrifft ausschließlich die Methode des Hubzündungsverfahrens.

Die US-PS 715,259 offenbart gleichfalls ein Bolzenschweißverfahren mittels Hubzündung, welches dadurch gekennzeichnet ist, dass im Bereich der Spitze des Schweißelementes eine höher legierte Metallbeschichtung in Form einer Kappe zum Verbinden unterschiedlicher Werkstoffe vorgesehen ist.
Schließlich sei auf die DE 195 07 649 A 1 verwiesen, welches ein Verfahren zum AC-WIG-Schweißen vorstellt, bei dem vor dem Zünden des Lichtbogens ein vorbestimmbarer Schweißstrom eingestellt wird und dass nach dem hochfrequenten Zünden des Lichtbogens der Startimpuls angelegt wird.

Diese Methode des Lichtbogenschweißens bezieht sich vorrangig auf das AC-WIG-Schweißen und ist nur für diese Schweißmethode verwendbar.

Mit den vorgestellten Verfahren der Hubzündung und der Spitzenzündung sollen kurze Prozeßzeiten bei geringem Wärmeeintrag erreicht werden, wobei jedoch von Nachteil ist, daß beim Zünden des Lichtbogens erhebliche Geräusche vorhanden sind, die als Knallgeräusche anliegen und Werte bis zu 150 dB (A) annehmen.
Ferner ist nachteilig, daß der Zündprozeß, wie auch der Schmelz- und Bindeprozeß ungesteuert ablaufen, eine starke Verspritzung der Schmelze nicht immer ausgeschlossen wird und den Verfahren eine uneffektive Energienutzung sowie geminderte Qualitäten anhaften.

Es ist daher Aufgabe der vorliegenden Erfindung, ein Verfahren zum Anschweißen von Schweißelementen an ein Werkstück zu entwickeln, welches in gesteuerter Art und Weise abläuft, die Geräuschentwicklung wesentlich herabgesetzt, die Verspritzung der Schmelze weitestgehend vermieden und die Bindungsqualitäten erhöht werden sowie den Einsatzbereich der bekannten bisherigen Spitzenzündung abdeckt.

Erfindungsgemäß wird die Aufgabe mit den Merkmalen des Anspruches 1 gelöst.

Bevorzugte Merkmale, die die Erfindung vorteilhaft weiterbilden, sind den nachgeordneten Ansprüchen zu entnehmen.

So wurde ein Verfahren zum Anschweißen von Schweißelementen an Werkstücken entwickelt, mit dem unterschiedlich gestaltete Schweißelemente in Form von Bolzen, Splinten, Haken, Ösen, Stegen, Stiften u.a. mittels einer gesteuerten Prozeßführung geschweißt werden können, wobei die gesamte Verfahrensführung so gestaltet ist, daß die einzelnen Teilprozesse, wie der Zündprozeß und die Schmelz- und Bindungsprozesse, in ihrer Gesamtheit oder aber auch in den einzelnen Prozeßstufen gesteuert ablaufen.
Die thermische Aktivierung der Fügezone geschieht mittels eines Lichtbogens, dessen Zündung unabhängig vom Werkstoff der zu schweißenden Teile erfolgt, nachdem eine zwischen Schweißelement und Werkstück vor oder nach Kontaktierung des Grundwerkstoffes ionisiert Strecke, die Zündstrecke, durch Unterbrechung des Stromführung im metallischen Kontakt oder mittels Hochspannung geschaffen wurde. Ihre Größe ist von der Spitzenform der Schweißelementes abhängig und erreicht Werte von > 0 bis etwa 1 mm.

Dabei erfolgt die Kontaktunterbrechung nach kurzer Erwarmung der Kontaktflächen am Schweißelement und Werkstück, wobei die Temperatur im Kontakt unter der Verdampfungstemperatur liegt, aber auch kleiner als die Schmeiztemperatur sein kann. Nach der Zündung des Lichtbogens überbrückt dieser die ionisierte Zündstrecke, die hervorgerufen wird durch eine thermische Elektronenemission infolge kurzzeitiger Erwärmung oder durch Feldemission durch das Anlegen einer Hochspannung.
Es gehört auch zur Erfindung, daß die Bewegung des zu fügenden Schweißelementes in der Schmelzphase in Abhängigkeit von der Zündstrecke mit einer Geschwindigkeit von v ≥ 0 erfolgt. Das Schweißelement kann somit während des Aufschmelzens in Halteposition (v = 0) bzw. in Senkposition (v > 0) oder in einer Kombination aus beiden geführt werden, wodurch der Energieeintrag beeinflußt und die für eine qualitätsgerechte Verbindung notwendige Schmelze erzeugt wird. In allen Fällen wird am Ende der Schmelzphase das Schweißelement beschleunigt und gesteuert dem Werkstück zugeführt, wobei der Beschleunigungsgrad vom Bewegungscharakter in der Schmelzphase und vom Abstand beider Bindungsflächen abhängig ist und auch auf den Beschleunigungsgrad steuernd Einfluß genommen wird.

In der anschließenden Bindungsphase fügt sich das Schweißelement mit dem Werkstück durch Kristallisation der gemeinsamen Schmelze unter gesteuerter bzw. flächenabhängiger Druckbeaufschlagung. Die Druckbeaufschlagung erfolgt schwingungsarm, da die Schweißelemente weitestgehend mittels schneller Antriebe, z. B. mittels Piezzoelementen, bewegt werden, wobei die Schweißelemente während ihrer Kontaktierung mit einer zusätzlichen Tordierung beaufschlagt werden können, deren Maß im Bereich von vorzugsweise 90 - 270° liegt.

Ferner gehört zur Erfindung, daß die Stirnflächen der Schweißelemente besonders gestaltet und auch mit einer Oberflächenbeschichtung versehen sind und eine Oberflächenspannungssenkung in der Schmelze der zu verbindenden Teile durch den Einsatz/Verwendung von Schweißelementen mit einem Sauerstoffgehalt, vorzugsweise mit einem Sauerstoffgehalt im Bereich von ≥ 0,001 % erreicht wird.

Das Verfahren ist gleichfalls so gestaltbar, daß beim Bolzenschweißverfahren mit Positionierung des Schweißelementes zum Werkstück eine Hochfrequenzspannung Anwendung finden kann, wobei dann diese Spannungszuführung dem Hauptentladekreis oder einem Vorstromkreis vorgeschaltet ist und so den Hauptlichtbogen bzw. einen Pilotlichtbogen zündet.

Durch die besondere Ausbildung der Stirnflächen der Schweißelemente, indem diese mit bestimmten profilierungen in Form von Kegeln, Kegelstümpfen, Riffelungen, Vertiefungen und Schneiden ausgebildet sind, wird das gesamte Verfahren positiv beeinflußt, wobei insbesondere der Lichtbogen während der Zündungs- und Schmelzphase stabil gehalten wird.
Dies wird noch wesentlich dadurch unterstützt, indem auf den Stirnflächen der Schweißelemente Oxyde mit geringer Austrittsarbeit bzw. auch sauren Charakters aufgebracht werden, die sichern, daß der Lichtbogen stabil brennt und die Gefahr der Tröpfchenbildung und der Verspritzung der schmelzflüssigen Phase wesentlich gesenkt und die Qualität der Schweißverbindung gesteigert wird.

Als oxydische Substanzen können dabei Manganoxyd, Siliziumoxyd, Natriumoxyd, Calziumoxyd oder auch Eisenoxyd zur Anwendung kommen.
Bei der Beschichtung der Stirnfläche des Schweißelementes mit beispeilsweise der oxydischen Substanz Siliziumdioxyd ergibt sich die Reaktion

(SiO₂) + 2 Fe = 2 (FeO) + [Si]

In dieser Bezeichnung bedeuten: ( ):in der Schlacke gelöste Elemente
[ ] : in der Schmelze gelöste Elemente

Das Siliziumdioxyd SiO₂ wird dabei in der Schmelze reduziert und das entstandene FeO in der Schlacke gelöst. Da das FeO auch im flüssigen Metall löslich ist, führt eine größere Konzentration dieses Anteiles in der Schlacke unweigerlich zur Erhöhung des FeO-Anteiles und damit zur Sauerstoffkonzentration in der Schmelze. Die Verteilung der Oxyde in diesen beiden Phasen ist konstant und kann in der Beziehung

K = (FeO) / [FeO] = konstant

ausgedrückt werden.

Mit nachfolgendem Ausführungsbeispiel soll die Erfindung naher erläutert werden.

In den dazugehörigen Zeichnungen zeigen
- Figur 1:: ein Schaubild der Prozeßführung über alle Phasen (mit Pilotlichtbogen)
- Figur 2:: ein Schaubild der Prozeßführung der Zündungsphase bei Verwendung einer Hochfrequenzspannung (mit Pilotlichtbogen)
- Figur 3; Figur 4:: Schaubilder der Zündphase ohne Pilotlichtbogen
- Figur 5:: Schaubild der Prozeßführung während der Schmelzphase
- Figur 6:: verschiedene Formen der Ausbildung der Stirnflächen von Schweißelementen

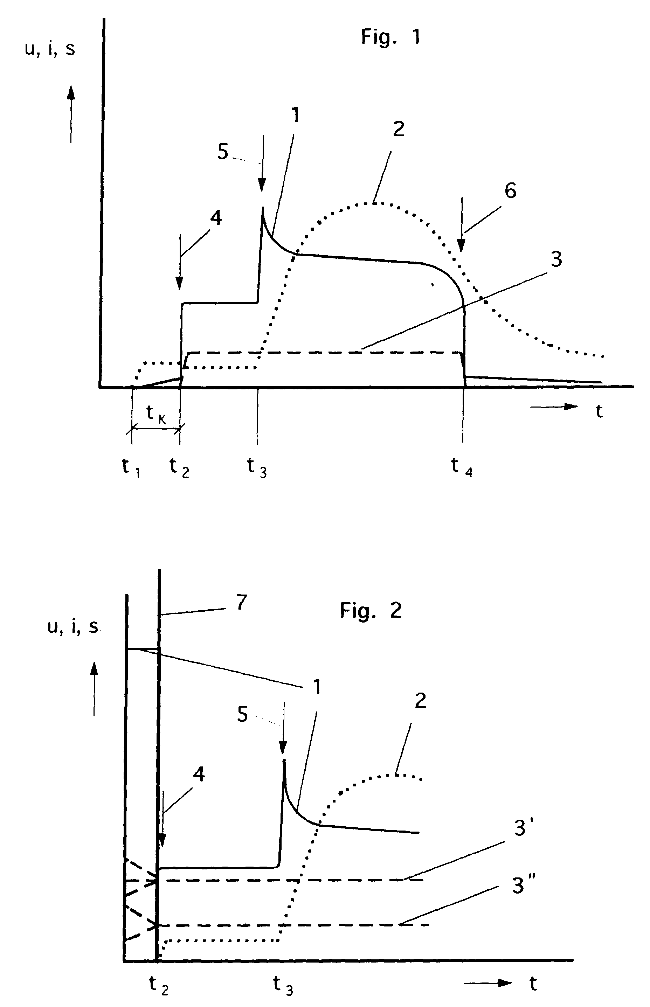

Die Figur 1 zeigt den gesamten Prozess bei Einsatz eines Bolzens mit minimierter Spitze, dessen Energieversorgung über eine Kondensatorbatterie erfolgt. Das Schaubild gemäß Figur 2 bezieht sich auf den Zündprozess, bei dem das Schweißelement in bisher üblicher Form, aber auch mit gestalteter Stirnfläche ausgebildet ist und eine Hochfrequenzspannung anliegt, die die Zündung des Lichtbogens bewirkt.

Bei beiden Vorgängen handelt es sich im weitesten Sinne um Bolzenschweißverfahren im Wirkbereich der Spitzenzündung, deren Verfahrensregime positiv beeinflußt werden, d. h. die Teilprozesse Zünden, Schmelzen und Bindung werden verbessert, wenn die Stirnflächen der eingesetzten Schweißelemente gemäß der Erfindung mit entsprechenden Oberflächenkonturen versehen und zusätzlich auf diesen Stirnflächen oxydische Substanzen aufgebracht sind.

Wie bereits oben ausgeführt, wird der gesamte Schweißprozess im Schaubild der Figur 1 verdeutlicht, und es zeigt in ihren Linienverläufen einmal den Spannungsverlauf 1, den Stromverlauf 2 und die Wegkurve 3 während des gesamten Prozesses.
Die Zündung des Hilfslichtbogens ist mit der Bezugszahl 4, die Zündung des Hauptlichtbogens mit der Bezugszahl 5 und der Zeitpunkt des Erlöschens des Lichtbogens mit der Bezugszahl 6 bezeichnet.
Gemäß der Figur 1 erfolgt anfänglich das Aufsetzen des Schweißelementes auf das Werkstück. Mit dem Aufsetzen bzw. danach wird der Vorstrom gezündet. Sein Wert steigt und erreicht nach kurzer Zeit den Sollwert. Die unmittelbare Kontaktzone zwischen Schweißelement und Werkstück erwärmt sich infolge des Stromflusses, was bildlich der Zeitabschnitt t₁ bis t₂ bzw. die Kontaktzeit t_{K} dokumentiert. Bei Unterbrechung des metallischen Kontaktes in der Stromführung zum Zeitpunkt t₂ steigt die Spannung an, und es erfolgt eine Ionisierung der Strecke zwischen Werkstück und dem Schweißelement. Es zündet der Hilfslichtbogen. Die ionisierte Strecke ist dabei sehr klein, der Strom liegt maximal bei 50 Ampere und die Geräuschentwicklung hierbei ist sehr gering. Zeitstrahlabschnitt t₁ bis t₂.
Während des Zeitabschnittes t₂ bis t₃ stabilisiert sich der Hilfslichtbogen (Pilotlichtbogen) und bereitet die Zündung des Hauptlichtbogens vor. Dabei bleibt der Weg 3 konstant und bestimmt die Spannung des Hilfslichtbogens. Der Hauptlichtbogen wird zum Zeitpunkt t₃ durch Zuschaltung der vollen Kondensatorenergie mit wesentlich kleinerem Schaltpegel gezündet. Die Spannung steigt bis zum Maximalwert, wodurch eine weitere Ionisierung der Lichtbogenstrecke erfolgt, und sinkt dann mit zunehmender leitfähigkeit der Lichtbogenstrecke.
Da die Schweißspannung eine Funktion vom Weg 3, von der Bewegungsart in der Schmelzphase und ferner vom Abstand der Bindeflächen vom Schweißelement zum Werkstück ist, stellen diese Faktoren neben der Zeit t, der Spannung U und der Stromstärke I Steuergrößen für den Energieeintrag dar.
Während des anschließenden Schmelzprozesses, im Schaubild mit dem Zeitbereich zwischen t₃ und t₄ dargestellt, erfolgt die Aufschmelzung. Die Fügezone mit ihren Schmelzen wird im weitesten Sinne zur Bindungsbildung vorbereitet.
Zum Ende des Schmelzprozesses, bildhaft dokumentiert durch t₄, schließt sich der Bindungsprozeß an.
Der Lichtbogen erlischt infolge der Kontaktierung der Schmelzen, wobei der Wegverlauf 3 gegen 0 geht. Dies ist der Beginn der Bindung, was durch das beschleunigte Eintauchen des Schweißelementes in das werkstückseitige Schmelzbad und durch Kristallisation der gemeinsamen Schmelze erfolgt.
In analoger Weise läuft der Zündungsprozeß gemäß der Darstellung nach Figur 2 ab, wobei hier eine Hochspannung in Form einer Hochfrequenzspannung 7 zugeschaltet wird. Zu Beginn der Zündungsphase wird das Schweißelement auf Zündabstand gefahren und die Hochspannung eingeschaltet, wobei das Schweißelement und der Grundwerkstoff nicht miteinander kontaktieren. Das Maß des Abstandes zwischen dem Schweißelement und dem Grundwerkstoff liegt bei s > 0 bis ca. 1 mm und ist in der Figur 2 mit dem Maximalwert 3' und dem Minimalwert 3'' dargestellt.
Die Zuschaltung der Hochspannung erfolgt zum Zeitpunkt t₂, gleichzeitig das Zünden des Hilfslichtbogens über die geschaffene ionisierte Zündstrecke.

In der Zeitspanne t₂ bis t₃ stabilisiert sich der Hilfslichtbogen und bereitet die Zündung des Hauptlichtbogens vor, welcher zum Zeitpunkt t₃ gezündet wird. Dabei steigt wiederum die Spannung bis zum Maximum und fällt dann wieder mit zunehmender Stabilisierung der Lichtbogenstrecke ab. Der entladungsbedingte Anstieg des Schweißstromes in diesem Zeitabschnitt wird mit der Kurve 2 dokumentiert.

Die weiteren Prozeßabläufe sind denen des Ausführungsbeispieles nach Figur 1 identisch, so daß bezüglich des Spannungs- und Stromverlaufes 1,2 auf Figur 1 verwiesen wird.

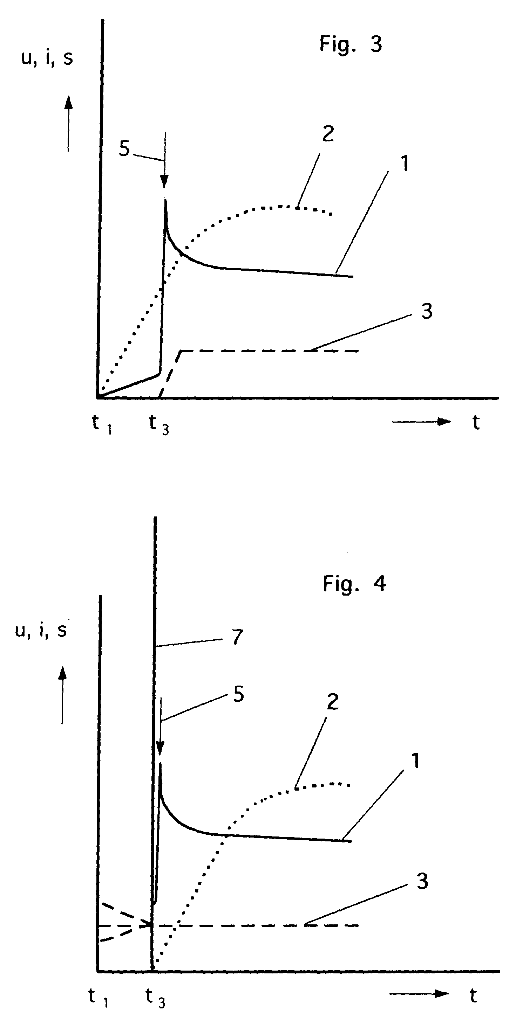

Die Figuren 3 und 4 verdeutlichen weitere mögliche Prozeßabläufe in der Zündphase beim Bolzenschweißen ohne Hilfslichtbogen. Während Figur 3 die Charakteristika der Spannungs- und Stromverläufe 1, 2 und die der Wegkurve 3 beim Zünden des Lichtbogens aus dem Kontakt heraus dokumentiert, zeigt die Figur 4 den Verlauf von Spannung, Strom und Weg 1, 2, 3 beim kontaktlosen Zünden durch Zuschaltung einer Hochspannung.

Bei dem Prozeßverlauf gemäß Figur 3 erfolgt zum Zeitpunkt t₁ das Aufsetzen des Schweißelementes und die Zuschaltung der Kondensatorenergie, wodurch in dem Zeitraum t₁ bis t₃ eine Erwärmung der Kontaktflächen von Schweißelement und Grundwerkstoff stattfindet. Zum Zeitpunkt t₃ erfolgt die Unterbrechung des metallischen Kontaktes in der Stromführung, gleichzeitig wird die ionisierte Zündstrecke geschaffen, der Hauptlichtbogen gezündet. Nach der Zündung sinkt die Schweißspannung ab, während der Schweißstrom entladungsbedingt noch ansteigt. Die weiteren Abläufe von Schweißspannung und Schweißstrom sind denen nach Figur 1 analog.
Das kontaktlose Zünden beim Anlegen einer Hochfrequenzspannung 7 und die Ausbildung bzw. die Verläufe von Schweißspannung, Schweißstrom und dem Weg, sind in der Figur 4 gezeigt. Sie verdeutlicht, daß in dem Zeitraum bis t₃ das Schweißelement den Grundwerkstoff nicht kontaktiert und das Abstandsmaß die zu ionisierende Zündstrecke bestimmt. Zum Zeitpunkt t₃ erfolgt die Zuschaltung der Hochfrequenzspannung 7, die geschaffene Zündstrecke wird ionisiert und der Lichtbogen gezündet. Die Spannung fallt nach Zündung des Hauptlichtbogens wieder ab, der Schweißstrom nimmt wertmäßig vorerst weiter zu und sinkt dann ebenfalls. Die Spannungs- und Stromverläufe 1, 2 während der Schmelzphase und der sich anschließenden Bindephase entsprechend wiederum denen, wie in Figur 1 gezeigt.

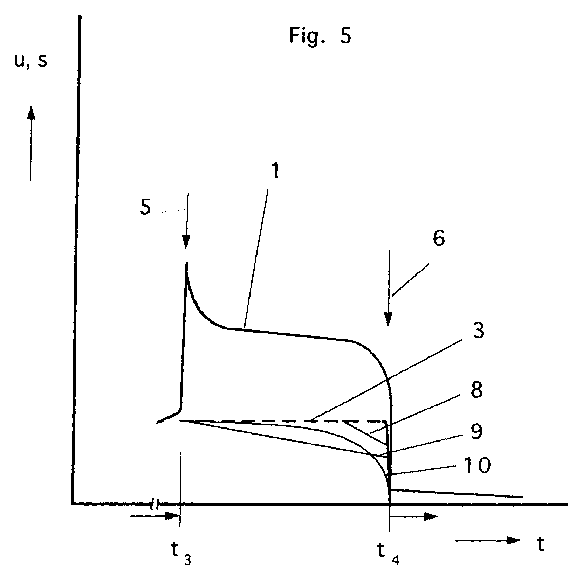

Die Prozeßführung innerhalb der Schmelzphase wird mit dem Schaubild nach Figur 5 verdeutlicht, in dem die unterschiedlichsten und wählbaren Bewegungsvarianten des Schweißelementes während der Schmelzphase mit den Bezugszahlen 3 und 8 bis 10 dargestellt sind.
Die Zündphase läuft gemäß des Schaubildes bis zum Zeitpunkt t₃, der Bindeprozeß folgt dem Schmelzprozeß und ist bildlich mit dem Richtungspfeil hinter dem Zeitpunkt t₄ dokumentiert. Zwischen den beiden Zeitpunkten t₃ und t₄ läuft der Schmelzprozeß ab, in dessen Prozeßführung das Schweißelement nach einem vorbestimmbaren Verfahrens-regime bewegt oder gehalten, d. h. gesteuert wird, was die Kurven bzw. Linien 3, 8, 9 und 10 dokumentieren.
Die Wahl der Bewegungsvarianten und somit die Prozeßführung während der Schmelzphase ist in den vier gezeigten Bewegungsabläufen möglich, wobei der gewünschte Bewegungsablauf des sich senkenden oder stehenden Schweißelementes vom Beschleunigungssystem für das Eintauchen des Schweißelementes in die Schmelze des Grundwerkstoffes abhängt.
Bei dem Bewegungsverlauf 3 steht im wesentlichen das Schweißelement in der Schmelzphase und wird erst kurz vor dem Erreichen der Bindungsphase zum Eintauchen bewegt. Somit können sich größere Schmelztropfen ausbilden, ohne einen Kurzschluß mit der grundwerkstoffseitigen Schmelze zu verursachen.
Diese Variante erfordert eine hohe Beschleunigung des Schweißelementes unmittelbar zum Ende der Schmelzphase, um schnell in das Schmelzbad eintauchen zu können, ohne daß die vorhandene Schmelze vor dem Eintauchen erkaltet.
Die Bewegungsabläufe 8 bis 10 verdeutlichen, daß während der Schmelzphase das Schweißelement sich bewegt, sich somit dem Werkstück nähert. Die am Ende der Schmelzphase notwendige Beschleunigung des Schweißelementes kann somit kleiner gewählt werden, da die Wegstrecke zum Eintauchen geringer ist. Die Gefahr der vorzeitigen Kontaktierung beider Elemente bei gleicher Tröpfchengröße und der damit verbundenen Gefahr der Verspritzung der Schmelze wird entgegengewirkt, indem mit einer bestimmten Beschleunigung das jeweilige Schweißelement zum Werkstück geführt wird.

Somit wird die Wahl der Bewegungsabläufe 8 bis 10 bestimmt durch den Schmelzprozeß, die Oberflächenspannung der Schmelze und die mögliche Beschleunigung beim Eintauchen des Schweißelementes in das werkstückseitige Schmelzbad.
Während bei dem Bewegungsverlauf 3 durch steuerbare Wegänderung das Maß der ionisierten Strecke nicht allzu groß gewählt werden sollte, da die Beschleunigung nicht unendlich groß sein kann, können bei den Bewegungsverläufen 8 bis 10 die Wegänderungen größer gewählt werden, da während der Bewegungsverläufe 8 bis 10 das Schweißelement mit stetiger oder mit stetig steigender Geschwindigkeit dem Werkstück und somit der Schmelze zugeführt wird, somit vor dem Eintauchen ein geringerer Abstand anliegt, wodurch mit einer kleineren Beschleunigung gearbeitet werden kann.

Die Ausbildung der Stirnflächen der Schweißelemente gemäß der Erfindung und die Aufbringung von oxidischen Substanzen sichern ein stabiles Lichtbogenbrennen auf der Bindungsfläche des zu schweißenden Schweißelementes, wodurch eine unkontrollierte Lichtbogenwanderung nach außen vermieden wird. Die Erhebungen bzw. Längen der gestalteten und profilierten Stirnflächen der Schweißelemente sollten vorzugsweise im Bereich von 0,05 bis 0,4 mm und das Maß des realisierten Weges bei der Kontaktunterbrechung vom Werkstück zum Schweißelement sollte im Bereich bis zu 1 mm liegen.

Der nachfolgende Bindeprozeß läuft unter einer veränderbaren Druckbelastung ab, wobei die Druckkraft beim Eintauchen des Schweißelementes in das Schmelzbad so groß sein muß, daß sie nicht nur zur Verdrängung örtlich angehäufter Schmelzen führt, sondern auch örtliche Verformungen thermisch aktivierter Flächen bedingt, was bedeutet, daß durch die kinetische Energie, eine Impulsenergie, während des Eintauchens des Schweißelementes die beiden Bindeflächen optimal genähert werden und Flächenpressungen, somit Druckbelastungen, anliegen, die sich örtlich der Warmumformung nähern und dabei die Bedingung p = σ _{f} erfüllen.
Dabei bedeutet p Druck- bzw. Flächenpressung in der Bindephase und σ_{f} die Fließspannung der Werkstoffe im Temperaturbereich der Warmformgebung. Die Werte dieser Impulskrafte sollen in Abhängigkeit von den Bedingungen im Bereich von 100 bis 2000 N liegen, um qualitatsgerechte Schweißungen zu realisieren.
Während des Andrückens innerhalb der Bindungsphase ist es vorteilhaft, eine gewisse Torsionsbeanspruchung in der Kontaktierungsphase der beiden Schweißteile einwirken zu lassen, dies in der Form, daß das zugeführte Schweißelement eine Tordierung erhält, die im bevorzugten Bereich von 90 bis 270° liegt.

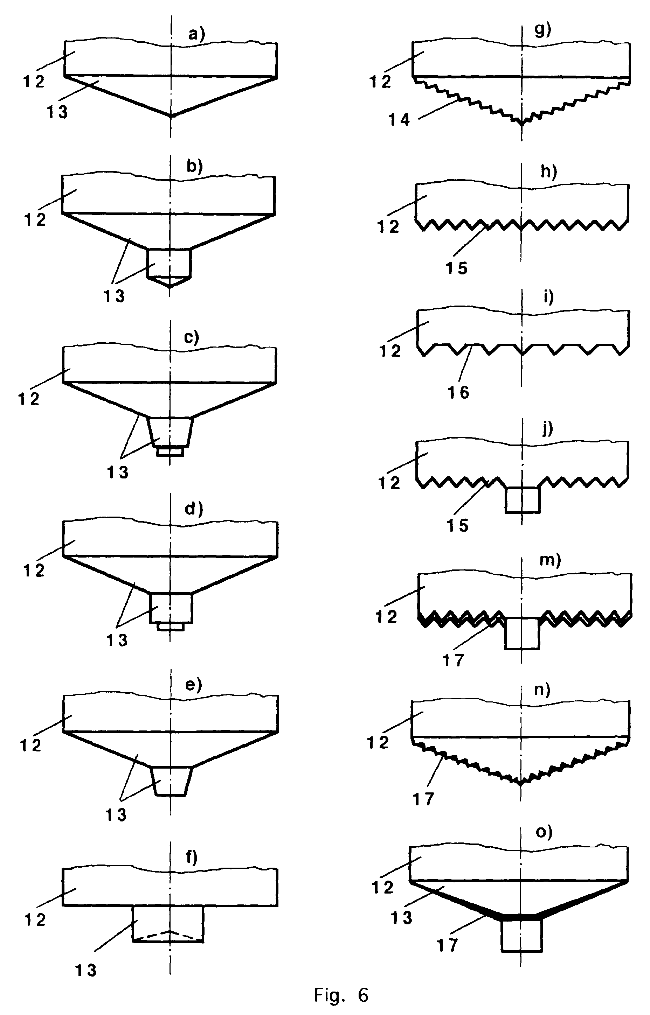

Die Oberflächenspannungen der schmelzflüssigen Phase auf dem Schweißelement und dem Grundwerkstoff beeinflussen die Ausbildung der Schmelze und ihrer Form in den thermisch aktivierten Zonen des Schweißspaltes. Ist sie hoch, so entstehen größere Tröpfchen auf den Oberflächen, die zur 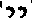 Kurzschlußbildung/Brückenbildung" und zum verstarkten, örtlichen Energieeintrag führen, wodurch die Verspritzungsgefahr der Schmelze vergrößert wird. Dies kann im äußersten Fall zur Energieentladung außerhalb der vorgesehenen Bindezone fuhren. Ist demgegenüber die Oberflächenspannung kleiner, dann ist die Benetzbarkeit durch die Schmelze größer und die Gefahr, örtlich verstärkt Energie einzubringen, kleiner und ein Verspritzen der schmelzflüssigen Phase unwahrscheinlich.
Dies wird wesentlich dadurch beeinflußt, daß auf den Stirnflächen der Schweißelemente oxidische Substanzen aufgebracht werden, die im Schmelzprozeß thermisch aktiviert werden und die Oberflächenspannung senken. Derartige oxidische Substanzen, welche vorzugsweise einen sauren Charakter besitzen, können Siliziumoxid, Eisenoxid, Manganoxid, Natriumoxid, oder auch Calciumoxid sein.
Die oxidischen Substanzen können sowohl auf glatten Oberflächen der Schweißelemente 12 aus auch auf deren profiliert ausgeführten Stirnflächen 13 aufgebracht werden.
Möglichkeiten und Formen der Ausbildung der Stirnflächen von Schweißelementen 12 sind in der Figur 6 gezeigt.
Dargestellt sind einige Ausführungen von Schweißelementen 12 mit besonders ausgebildeten Stirnflächen 13, wobei die Stirnflächen 13 dabei in Form von Kegeln, zylindrischen Ansätzen, kegligen Ansätzen, zylindrischen Ansätzen mit Vertiefungen, aber auch mit entsprechenden Riffelungen 14 versehen sein können, wie in den Darstellungen 6 a bis 6 g dargestellt. Weitere Gestaltungsformen ergeben sich aus den Darstellungen 6 h bis 6 j, bei denen unmittelbar auf den glatten Stirnflächen 13 Erhebungen 15 oder Vertiefungen 16 in unterschiedlicher Querschnittsgestaltung auf- bzw eingebracht sind.
Die Darstellungen nach 6 m bis 6 o zeigen die Kombination aus beiden, nämlich die besonders herausgebildete Stirnfläche 13 mit der Beschichtung durch eine oxidische Substanz 17.

## Patentansprüche

1. Verfahren zum Anschweißen von Schweißelementen an ein Werkstück, mittels eines Schweißverfahrens, bei dem das Bauteil mit einer Schweißpistole bzw. einem Schweißkopf auf das Werkstück gesetzt, unter Bildung eines Lichtbogens, in einem Abhub vom Werkstück abgezogen und unter Bildung eines Schweißlichtbogens in einem Eintauchhub wieder auf das Werkstück aufgesetzt wird, bzw. bei dem der Bolzen mit einer Zündspitze an das Werkstück herangeführt wird, wahrend der Zuführung durch Berührung der Zündspitze am Schweißstück der Schweißstromkreis geschlossen wird und der Schweißstrom unter Entladung des Schweißkondensators zu fließen beginnt, dadurch gekennzeichnet, dass
- mittels einer Prozeßführung das Verfahren in seiner Gesamtheit gesteuert abläuft, aber auch in den einzelnen Prozeßstufen, den Teilprozessen wie Zündprozeß und den Schmelz- und Bindungsprozessen, diese einzeln, bezogen auf eine der Teilprozeßstufen, gesteuert ablaufen können,
- die Zündung des Lichtbogens unabhängig vom Werkstoff der zu schweißenden Teile zwischen Schweißelement und Werkstoff erfolgt, wobei der Abstand vom Schweißelement zum Werkstoff in Abhängigkeit von der Spitzenform eines Schweißelementes im Bereich bis 1 mm liegt,
- der Lichtbogen nach seiner Zündung die ionisierte Strecke, hervorgerufen durch eine thermische Elektronenemission infolge Erwärmung oder über Feldemission durch das Anlegen einer Hochspannung, so einer Hochfrequenz-spannung, überbrückt,
- das Schweißelement auch bei Aufrechterhaltung des Stromflusses am Ende der Schmelzphase beschleunigt dem werkstückseitigen Schmelzbad zugeführt wird,
- über eine bestimmte Gestaltung und Ausführung der Stirnflächen der Schweiß-elemente, in Form von Kegeln, Kegelstümpfen, Riffelungen, Vertiefungen und Schneiden, die mit einer Oberflächenbeschichtung versehen sind, die Zünd-, Schmelz- und Bindungsprozesse steuerbar beeinflussbar sind,
- beim Eintauchen in das werkstückseitige Schmelzbad auf das Schweißelement eine Druck- und Torsionsbeaufschlagung ausgeübt wird.

2. Verfahren nach Anspruch 1, dadurch gekennzeichnet, dass
beim Bolzenschweißen mit glatter und/oder profilierter Stirnfläche die Kontaktunterbrechung nach einer kurzen Erwärmung der Kontaktflächen erfolgt, wobei die Temperatur Tₖ der Kontaktflächen unter der Verdampfungstemperatur Tᵥ liegt und auch kleiner als die Schmeiztemperatur Tₛ sein kann, was bedeutet, dass Tᵥ > Tₖ ≥ Tₛ ist und die Zündung des Lichtbogens zwischen den Kontaktflachen erfolgt.

3. Verfahren nach einem der Ansprüche 1 bis 2, dadurch gekennzeichnet, dass
beim Bolzenschweißverfahren mit Positionierung des Schweißelementes zum Werkstück, die Hochspannungszuführung dem Hauptentladekreis oder einem Vorstromkreis vorgeschaltet ist und so den Hauptlichtbogen oder einen Pilotlichtbogen zündet.

4. Verfahren nach einem der Ansprüche 1 bis 3, dadurch gekennzeichnet, dass
der Schmelzprozess bei fast stehendem Schweißelement, einer Senkgeschwindigkeit annähernd 0 abläuft und bei Beginn der stark beschleunigten Absenkung des Schweißelementes die Zuführung des Schweißstromes nicht unterbrochen wird, alternativ der Schmelzprozess auch bei stehendem Schweißelement ablaufen und bei Beginn der stark beschleunigten Absenkung des Schweißelementes die Zuführung des Schweißstromes auch unterbrochen werden kann.

5. Verfahren nach einem der Ansprüche 1 bis 4, dadurch gekennzeichnet, dass
beim Eintauchen des Schweißelementes in das werkstückseitige Schmelzbad neben der Druckbeaufschlagung eine zusätzliche Torsionsbeaufschlagung, bewirkt durch eine Tordierung des Schweißelementes im Bereich von 90° bis 270°, während der Bindephase wirkt und die Festigkeit der Schweißung erhöht wird.

6. Verfahren nach einem der Ansprüche 1 bis 5, dadurch gekennzeichnet, dass
das Eintauchen der Abwärtsbewegung des Schweißelementes in das werkstückseitige Schmelzbad mittels schneller Antriebe, beispielsweise Piezoelemente, in gesteuerter Bewegung realisiert wird.

7. Verfahren nach einem der Ansprüche 1 bis 6, dadurch gekennzeichnet, dass
die Zündflächen der Schweißelemente mit oxidischen Substanzen, wie MnO, SiO₂, NaO, CaO oder FeO, beschichtet sind, die Verteilung der Oxide sowohl in der Schlacke als auch in der Schmelze konstant ist und die Bedingungen K = (FeO) / [FeO] = konstant genutzt werden, wobei die Elemente (FeO) in der Schlacke und die Elemente [FeO] in der Schmelze gelöst sind.

8. Verfahren nach einem der Ansprüche 1 bis 7, dadurch gekennzeichnet, dass
die beschichteten Stirnflächen der Schweißelemente den Anstieg des Sauerstoffgehaltes in der schmelzflüssigen Phase sichern, somit die Lichtbogenstabilität erhöht und die Oberflächenspannung in der Schmelze gesenkt wird.

9. Verfahren nach einem der Ansprüche 1 bis 8, dadurch gekennzeichnet, dass
bei Auftragung der oxidischen Substanz, beispielsweise SiO₂, die unterschiedliche Affinität der Elemente zu Sauerstoff an den Phasengrenzen bzw. in der Schmelze genutzt wird und unter Beachtung der Bedingungen
(SiO₂) + 2 Fe = 2 (FeO) + [Si] K = (FeO) /[FeO] = const.
der Sauerstoffgehalt in der Schmelze ansteigt, dabei sind das (SiO₂) und das (FeO) in der Schlacke und das [Si] und das [FeO] in der Schmelze gelöst und eingebunden.

10. Verfahren nach einem der Ansprüche 1 bis 9, dadurch gekennzeichnet, dass
eine Oberflächenspannungssenkung in der Schmelze der zu verbindenden Teile durch den Einsatz/Verwendung von Schweißelementen mit einem Sauerstoffgehalt, vorzugsweise mit einem Sauerstoffgehalt im Bereich von ≥ 0,001 %, erreicht wird.
